Europäisches Patentamt

(19) European Patent Office    (11) Publication number: **0 251 980**
Office européen des brevets                                **B1**

(12)                    **EUROPEAN PATENT SPECIFICATION**

(45) Date of publication of the patent specification:     (51) Int. Cl.⁵: **B60C 15/05, B60C 15/06**
07.11.90

(21) Application number: **87630105.2**

(22) Date of filing: **19.06.87**

(54) **Pneumatic tire.**

(30) Priority: **24.06.86  US 877940**                    (73) Proprietor: **THE GOODYEAR TIRE & RUBBER COMPANY, 1144 East Market Street, Akron, Ohio 44316-0001(US)**

(43) Date of publication of application:
**07.01.88 Bulletin 88/1**

                                                      (72) Inventor: **Gasowski, Chester Joseph, 3624 Dogwood Street, Uniontown Ohio 44685(US)**
(45) Publication of the grant of the patent:              Inventor: **Kolowski, Michael Alois, 2993 Sunnybrook Road, Mogadore Ohio 44260(US)**
**07.11.90 Bulletin 90/45**                            Inventor: **Smithkey, John Clarence, 1271 Overland Avenue, N.E., North Canton Ohio 44720(US)**
                                                      Inventor: **Ford, Thomas Latimer, 1225 Catherine Street, Mogadore Ohio 44260(US)**
(84) Designated Contracting States:
**DE FR GB IT**

(56) References cited:                                     (74) Representative: **Weyland, J.J. Pierre, Goodyear Technical Center-Luxembourg, L-7750 Colmar-Berg(LU)**
**WO-A-87/02627**
**DE-A-2 936 337**
**FR-A-1 327 810**
**FR-A-1 364 021**
**FR-A-2 007 285**
**FR-A-2 246 406**

**PATENT ABSTRACTS OF JAPAN, vol. 7,
no. 207 (M-242)(1352), 13th September 1983**

## Description

### PNEUMATIC TIRES

The present invention relates generally to the bead portion of a pneumatic tire, and more specifically to a tire having a bead portion which contains heat shrinkable material to secure the turn-up portion of a carcass ply, or plies, in a desired location.

The desirability of having the turn-up portion(s) of the carcass ply (or plies) of a pneumatic tire extend radially outwardly of the bead core the shortest possible distance is well recognized in the tire art. These advantages include better bead durability, and reduced material costs. One method of securing the turn-up portion of a carcass ply in a desired location, thus reducing the required turn-up height has been to place the turn-up between the bead core and an auxiliary annular metal locking member. Such a structure is taught in the following prior art patents: British 854,971, which corresponds i.e. to the preamble of the claim; British 1,000,113; German O.S. 1,605,627; and German O.S. 2,936,337. One of the problems left unsolved by the prior art documents is that if the dimensions of both the bead core and the locking member are not extremely precise they will not act together to lock the turn-up portion of a carcass ply in place. Furthermore, the relative locations of the bead core and the locking member must be very precise, and the assembly would require expensive special equipment if such structures are to be manufactured in volume. These problems are overcome by the present invention.

There is provided in accordance with the present invention a pneumatic comprising:

(a) a pair of annular bead cores each of which comprises a plurality of metallic filaments;
(b) a carcass ply anchored around said bead core, said carcass ply having a main portion and a turn-up portion, a radially outer edge of the turn-up portion being in contact with said main portion; and
(c) a strip of side-by-side cords of a non-metallic heat shrinkable material which has a permanent thermal shrinkage of at least 2%, said cords being oriented at 0° to 75° with respect to the centerplane of the tire, said strip being disposed adjacent to said carcass ply on the side of the carcass ply distal from said bead core from a point located radially inwardly of the bead core to a point located radially outwardly of the bead core, said strip of cords securing the turn-up portion of the carcass ply in a predetermined position and protecting the carcass ply from damage.

The invention may be better understood by referring to the figures of the drawing wherein:

Fig. 1 is a cross-sectional view of a tire according to the prior art; and
Figs. 2 is a cross-sectional view of the bead portion of a tire according to the present invention.

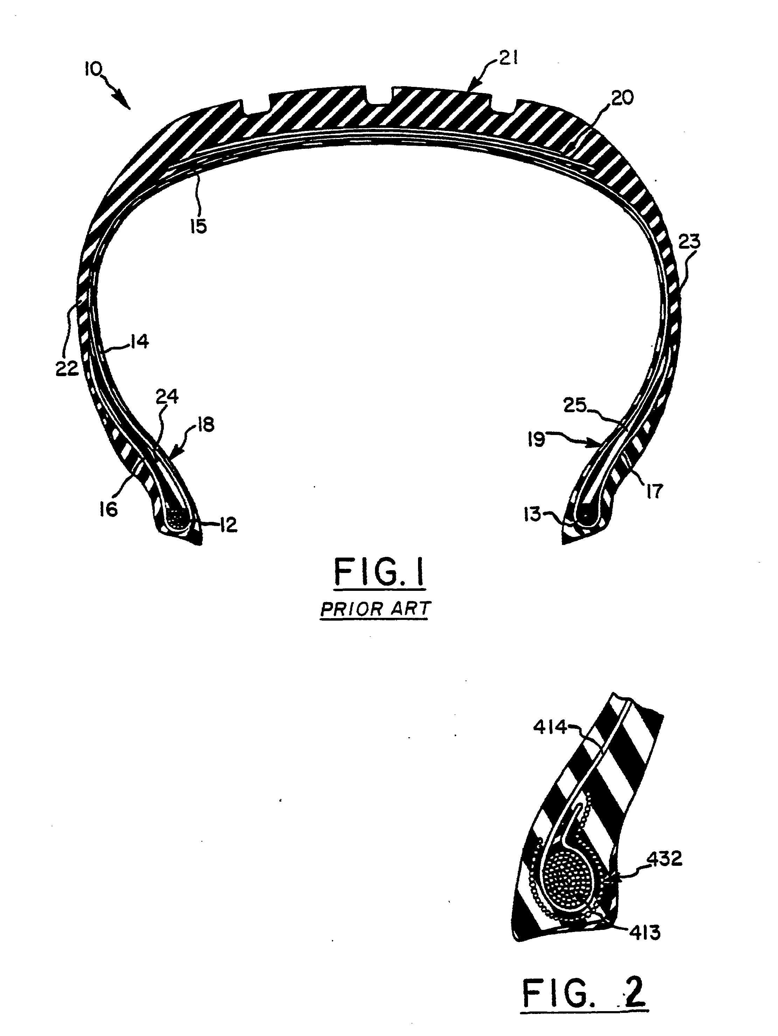

Referring first to Fig. 1 there is shown by way of example a cross-sectional view of a typical prior art pneumatic tire 10. A typical pneumatic tire of the type to which the present invention relates has a pair of substantially inextensible annular bead cores 12,13 which each comprise a plurality of metallic filaments, which filaments may or may not be twisted together to form a cable. At least one carcass ply 14 of metallic or non-metallic filaments, cords or cables has a main portion 15 that extends between the bead cores 12,13 and a turn-up portion 16,17 anchored around each of the bead cores. A belt structure 20 is disposed radially outwardly of the main portion of the carcass ply and a ground-engaging tread portion 21 is disposed radially outwardly of the belt structure. Sidewall portions 22,23 extend radially inwardly from the tread portion to the bead portions. A circumferentially extending filler strip or apex 24,25 of a suitable elastomeric material is interposed between the main portion 15 and each of the turn-up portions 16,17 of the carcass ply for the purpose of stiffening and reinforcing the bead portions and radially inner portions of the sidewalls of the tire. Other components such as chafer strips and toe guard strips may be located in the bead portions at the discretion of a tire designer.

As used herein and in the claim the terms "radial" and "radially" refer to directions going towards or away from the axis of rotation of a tire. The terms "axial" and "axially" indicate directions that are parallel to the axis of rotation of a tire.

As used herein, a "cord" is understood to be either a single filament or a plurality of filaments twisted together to form a cable.

As used herein and in the appended claim "permanent thermal shrinkage" is understood to mean the intrinsic dimensional stability of a material when it is exposed to an elevated temperature as indicated by the percentage of permanent shrinkage determined using the following test method. In this test method a cord is exposed to a temperature of 177°C and its percentage of shrinkage is measured directly from a calibrated dial in a shrinkage meter, which determines the total shrinkage inherent in the material.

The apparatus used in this test method include:

(1) a Testrite Thermal Shrinkage Oven/Meter, Model T.S. 10AB, (or a later model of this same device) manufactured by Testrite, Ltd., Woodfield Works, Old Lane, Halifax, England, HX3 6TF;
(2) a timer; and
(3) pretension weights ranging from 8 to 40 grams.

The test procedure is as follows:

1. Connect the shrinkage meter to a suitable means of power supply. Set test temperature at 177°C on temperature regulator. Allow about 20 minutes for the oven to reach operating temperature-- operating temperature is reached when the deviation monitor needle reaches and remains at the zero position of the monitor scale.

2. Cut fabric samples 660 mm in length. Make a loop at one end of each cord so that pretension weights can be hung therefrom.

3. Draw the sliding carriage forward. Secure the other end of the cord sample in the center of the stationary clamp located to the right of the sliding carriage.

4. Place the cord over the takeup drum to the left of the carriage and hang the proper pretension weight on the cord. The pretension weight should be 0.01 grams per denier of the cord. For example, a 1000/3 polyester cord (3 filaments of 1000 denier each) should have a pretension weight of 30 grams.

5. With the sample cord in position in the center of the pickup drum, set pointer to zero.

6. Gently push the carriage assembly with the cord sample forward to the fullest extent into the heated oven. Start timer immediately to record shrinkage.

7. At the end of two minutes read and record % total shrinkage from the calibrated scale indicated by the pointer.

8. Pull sliding carriage backward to remove sample from heated zone; immediately thereafter start timer. Read and record % permanent shrinkage after a one minute cooling period from the calibrated scale.

Tires according to the present invention have been manufactured using a clamping member in which the heat shrinkable material was 1260/2 Nylon 6,6, having a permanent thermal shrinkage of about 4%. A plurality of cords, in this instance 6, in side-by-side relationship were embedded in an elastomeric material to form a tape which was wrapped around the bead core and turn-up portion of the carcass ply two complete turns while maintaining tension on the tape. During the shaping and curing process the clamping member was distorted in cross-section, but it still functioned to secure the turn-up portion of the carcass ply in the desired location. It is understood that other nylon materials, as well as polyester or other heat shrinkable materials having a permanent thermal shrinkage of at least 2% may be employed in the practice of this invention.

The turn-up portion extends radially outwardly of the bead core a minimal distance to allow for some pull-down of the carcass ply during the shaping and curing process, otherwise the turn-up could end up not clamped in place by the bead core and clamping member. For example, in a passenger tire the edge of the turn-up portion may be located about 10 mm radially outwardly of the bead core. Of course the exact location of the radially outer edge of the turn-up portion of the carcass ply should be selected in accordance with good engineering practice depending upon the carcass ply material and the cross-sectional shape of the tire. However, in any case, the turn-up should not extend radially outwardly of the rim flange (not shown) when the tire is mounted upon its designated rim, while the radially outer edge of the turn-up is in contact with the main portion of the carcass ply.

It is understood that in place of having the clamping member comprise a strip of cords of a heat shrinkable material a single cord of heat shrinkable material could extend circumferentially about the bead core and turn-up portion of the carcass ply a plurality of times.

Fig. 2 shows yet another embodiment of the invention in which a toe guard 432 is folded around the carcass ply and bead core 413 such that it is adjacent to the carcass ply 414 from the main portion to that part of the turn-up portion which is located radially outwardly of the bead core. The clamping member (which also functions as a toe guard) comprises a plurality of cords of a heat shrinkable material arranged in a side-by-side relationship and oriented at an angle of between 10° and 45° with respect to the centerplane of the tire. That is to say, in this embodiment a single ply of fabric of side-by-side cords of heat shrinkable material acts as both a toe guard and a clamping member.

In the embodiment illustrated in Fig. 2, the clamping member/toe guard or even a clamping member/chafer comprises a strip of side-by-side cords of a heat shrinkable material embedded in a suitable elastomeric substance and having a permanent thermal shrinkage of at least 2%. This strip of cords extends circumferentially and extends in contact with the radially innermost carcass ply (or the only carcass ply) from a location radially inward of the bead core to a location radially outward of the bead core and closely adjacent to the main portion of the carcass ply, and there is no filler strip or apex disposed between the main portion and turn-up portion of the carcass ply. The side-by-side cords in the strip are preferably oriented at angles in the range of 10° to 45° with respect to the centerplane of the tire, but in any case at angles in the range of 0° to 75° with respect to the centerplane of the tire.

This use of a single component for dual purposes as either a toe guard/clamping member or chafer/clamping member provides not only the aforementioned advantages over the prior art but also provides economical use of materials, labor, and machine time.

**Claims**

A pneumatic tire comprising:
(a) a pair of annular bead cores (413) each of which comprises a plurality of metallic filaments;
(b) a carcass ply (414) which is folded about each said bead core (413), said carcass ply having a main portion that extends between the bead cores and turn-up portions that are anchored around the bead cores, a radially outer edge of each said turn-up portion of the carcass ply being in contact with the main portion of the carcass ply without any filler strip or apex therebetween;
(c) a clamping member (432) which is at least in part disposed radially outwardly of each said bead core (413) and extending circumferentially thereabout securing said turn-up portion in a predetermined position, the respective turn-up portion of the carcass ply (414) being radially interposed between and directly adjacent to both the clamping member and the bead core, characterized by each said clamping member (432) comprising a circumferentially extending strip of an elastomeric material containing side-by-side cords of a nonmetallic heat shrinkable material which has a permanent thermal shrinkage of at least 2%, said cords being oriented at 0° to 75° with respect to a plane parallel to the centerplane of said tire, said clamping member being disposed directly adjacent to said carcass ply distal from said bead core and folded about said bead core from a point located axially inwardly of the bead core to a point radially outwardly of the bead core such that said clamping member is directly adjacent to both turn-up portion and main portion of the carcass ply and the carcass ply (414) is clamped between said clamping member (432) and said bead core (413), and ist thus protected from damage.

## Revendications

Bandage pneumatique comprenant:
(a) une paire de tringles annulaires (413), chacune d'elles étant constituée par plusieurs filaments métalliques;
(b) une nappe de carcasse (414) qui est repliée autour de chaque tringle (413), la nappe de carcasse comprenant une portion principale qui s'étend entre les tringles et les portions de recouvrement ancrées autour des tringles, un bord radialement externe de chaque portion de recouvrement de la nappe de carcasse se trouvant en contact avec la portion principale de la nappe de carcasse sans aucune bande de remplissage ou aucun bourrage entre elles;
(c) un organe de serrage (432) qui est, au moins en partie, disposé radialement vers l'extérieur de chaque tringle (413) et qui s'étend circonférentiellement autour de celles-ci, fixant la portion de recouvrement dans une position prédéterminée, la portion de recouvrement respective de la nappe de carcasse (414) étant radialement intercalée entre et en position directement adjacente, à la fois à l'organe de serrage et à la tringle, caractérisé en ce que chaque organe de serrage (432) comprend une bande de matière élastomère s'étendant circonférentiellement et contenant des câblés disposés côte à côte, constitués d'une matière non métallique rétrécissant à la chaleur, cette matière ayant un rétrécissement thermique permanent d'au moins 2%, les câblés étant orientés selon un angle allant de 0° à 75° par rapport à un plan parallèle au plan central du bandage pneumatique, l'organe de serrage étant situé directement en position adjacente à la nappe de carcasse en position distale par rapport à la tringle et étant replié autour de la tringle depuis un point situé axialement vers l'intérieur de la tringle jusqu'à un point situé radialement vers l'extérieur de la tringle, de telle sorte que l'organe de serrage se trouve directement en position adjacente, à la fois à la portion de recouvrement et à la portion principale de la nappe de carcasse, et que la nappe de carcasse (414) soit serrée entre l'organe de serrage (432) et la tringle (413), pour être ainsi protégée contre la dégradation.

## Patentansprüche

Luftreifen mit:
(a) einem Paar von Ringwulstkernen (413), von denen jeder eine Vielzahl von metallischen Filamenten bzw. Fäden umfaßt;
(b) einer Karkassenlage (414), die um jeden der Wulstkerne (413) gefaltet ist, wobei die Karkassenlage einen Hauptteil aufweist, der sich zwischen den Wulstkernen erstreckt und umgeschlagene bzw. hochgeschlagene Teile umfaßt, die um die Wulstkerne verankert sind, wobei eine radial äußere Kante jedes hochgeschlagenen Teils der Karkassenlage in Berührung mit dem Hauptteil der Karkassenlage ohne irgendeinen Wulstkeilstreifen bzw. Kernreiter dazwischen steht;
(c) einem Klemmglied (432), welches zumindest teilweise radial außerhalb jedes Wulstkernes (413) angeordnet ist und sich in Umfangsrichtung darum erstreckt und den hochgeschlagenen Teil in einer vorbestimmten Position sichert, wobei der zugeordnete hochgeschlagene Teil der Karkassenlage (414) radial zwischen das Klemmglied und den Wulstkern und direkt benachbart zu beiden eingesetzt ist, dadurch gekennzeichnet, daß jedes Klemmglied (432) einen sich in Umfangsrichtung erstreckenden Streifen aus einem elastomeren Material umfaßt, welches Seite-an-Seite-Korde aus einem nichtmetallischen, mit Wärme schrumpfbaren Material enthält, welches eine permanente thermische Schrumpfung von wenigstens 2% aufweist, wobei die Korde unter 0° bis 75° in bezug auf eine Ebene parallel zur Mittenebene des Reifens ausgerichtet sind, daß das Klemmglied direkt angrenzend an die Karkassenlage distal von dem Wulstkern angeordnet und um den Wulstkern von einem Punkt, der axial innerhalb des Wulstkernes gelegen ist, zu einem Punkt radial außerhalb des Wulstkernes gefaltet ist, so daß sich das Klemmglied direkt angrenzend sowohl an dem hochgeschlagenen Teil als auch an dem Hauptteil der Karkassenlage befindet und die Karkassenlage (414) zwischen dem Klemmglied (432) und dem Wulstkern (413) eingeklemmt ist und so vor Beschädigung bewahrt wird.

## Claims

1. Device for closing a top central opening of a vessel (28), comprising a sealing valve (44) carried by one end of a control arm (68) inside the vessel (28) and cooperating with a seat (54) around said opening, a mechanism for operating the valve (44), said mechanism comprising a hollow rotary support (60) housed about its axis of rotation X in a leaktight bearing (62) on the wall of the vessel (28) and connected to the other end of the control arm (68) by means of a device permitting axial displacement of the valve (44) in relation to its seat, characterized in that the support (60) of the mechanism for operating the valve (44) is mounted in such a manner that its axis of rotation X forms an acute angle with the vertical axis of the opening of the vessel (28).

2. Device according to Claim 1, characterized in that the support (60) is extended towards the interior of the vessel (28) by a clevis (64) forming a pivot support for said control arm (68), of which the opposite end to that carrying the valve (44) is connected to a control rod (70) disposed axially in the support (60) and adapted to slide axially through the action of a motor (72) fastened to the support (60).

3. The application of the device according to either of Claims 1 or 2 to a storage hopper (78) of a shaft furnace charging installation, characterized in that the hopper (78) is generally pear-shaped, its largest section being situated at the level of the displacement trajectory of the sealing valve (44).

## FIG. 1

### PRIOR ART

## FIG. 2